(19) Europäisches Patentamt
European Patent Office
Office européen des brevets

(11) **EP 3 819 061 B1**

(12) **EUROPEAN PATENT SPECIFICATION**

(45) Date of publication and mention
of the grant of the patent:
**20.09.2023 Bulletin 2023/38**

(21) Application number: **20206129.7**

(22) Date of filing: **06.11.2020**

(51) International Patent Classification (IPC):
**B23K 10/00** (2006.01)   **B23K 37/02** (2006.01)
**H05H 1/36** (2006.01)

(52) Cooperative Patent Classification (CPC):
**B23K 10/00; B23K 10/006; B23K 37/0235;**
**H05H 1/34; H05H 1/3494**

(54) **PLASMA TORCH CUTTING SYSTEMS AND METHOD, WITH CALCULATION OF REAL-TIME VELOCITY MAGNITUDE**

PLASMABRENNERSCHNEIDSYSTEME UND -VERFAHREN MIT BERECHNUNG DER ECHTZEIT-GESCHWINDIGKEIT

SYSTÈMES ET MÉTHODE DE DÉCOUPE PAR TORCHE PLASMA AVEC CALCUL DE LA MAGNITUDE DE LA VELOCITÉ EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2019 US 201962932550 P**
**05.06.2020 US 202016893563**
**01.10.2020 US 202017060203**

(43) Date of publication of application:
**12.05.2021 Bulletin 2021/19**

(73) Proprietor: **Lincoln Global, Inc.**
**Santa Fe Springs, CA 90670 (US)**

(72) Inventor: **WILLIAMS, Christopher J.**
**Norham, Northumberland TD15 2JY (GB)**

(74) Representative: **Grosse Schumacher Knauer von Hirschhausen**
**Patent- und Rechtsanwälte**
**Schloss Schellenberg - Backhaus**
**Renteilichtung 1**
**45134 Essen (DE)**

(56) References cited:
**JP-A- H06 312 269   US-A- 5 521 350**
**US-A1- 2015 251 267   US-B1- 6 274 842**

**Description**

The present invention relates to cutting systems that utilize plasma torches, in particular to plasma cutting systems and method according to the preamble of claims 1, 5 and 9 respectively (see for example US 2015/251267 A1), for controlling cutting current and/or gas flow during a cutting operation.

TECHNICAL BACKGROUND

Automated plasma cutting systems have been developed which use computer numerical control (CNC) technology to control the movement and process of a plasma cutting operation, including controlling the movement of the cutting torch. For example, a CNC controller can move a plasma torch in perpendicular X and Y directions along a workpiece placed onto a cutting table to cut a desired shape or part from the workpiece. Workpieces can also be held by a fixture for cutting by a torch mounted to a robot whose movements are controlled by a robot controller. A consistent kerf (e.g., a consistent cut width and bevel angle) is desirable so that the part cut from the workpiece has generally uniform edges and correct dimensions. Cutting speed or torch velocity can affect the kerf, and velocity changes can result in a widening or narrowing of the kerf. For example, faster cutting speeds provide a narrower kerf and slower cutting speeds provide a wider kerf.

With respect to optimising kerf and/or cutting conditions, according to the present invention, plasma cutting systems according to respectively claims 1 and 5 and a plasma cutting method according to claim 9 are defined. Preferred embodiments of the present invention are defined in the dependent claims. The follow-ing summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

The first plasma cutting system according to the present invention includes a plasma cutting power supply configured to provide a cutting current to a torch to create a plasma arc. A controllable gas valve regulates at least one of a flow rate and a pressure of a plasma gas supplied to the torch. A controller is operatively connected to the plasma cutting power supply to control a current level of the cutting current, and is operatively connected to the controllable gas valve to adjust a valve position of the controllable gas valve. The controller is configured to receive real-time torch position information from a motion control system that controls positioning of the torch. The real-time torch position information includes torch positions along a first axis and torch positions along a second axis that is perpendicular to the first axis. The controller is further configured to calculate respective derivatives from the torch positions along the first axis and the torch positions along the second axis. The controller is further configured to calculate a real-time velocity magnitude of the torch from the respective derivatives, and adjust the current level of the cutting current and the valve position of the controllable gas valve based on the calculated real-time velocity magnitude of the torch.

The second plasma cutting system according to the present invention includes a plasma cutting power supply configured to provide a cutting current to a torch to create a plasma arc. A controllable gas valve regulates at least one of a flow rate and a pressure of a plasma gas supplied to the torch. A controller is operatively connected to the plasma cutting power supply to control a current level of the cutting current, and operatively connected to the controllable gas valve to adjust a valve position of the controllable gas valve. The controller is configured to receive real-time torch position information from a motion control system that adjusts velocity of the torch when cutting a corner portion of a part cut from a workpiece. The controller is further configured to calculate first derivatives from the real-time torch position information and determine real-time velocity magnitudes of the torch when the corner portion is cut from the workpiece. The controller is further configured to maintain kerf consistency by adjusting, based on the determined real-time velocity magnitudes of the torch, the current level of the cutting current and the valve position of the controllable gas valve as the corner portion of the part is cut from the workpiece.

The plasma cutting method according to the present invention includes providing a plasma cutting system that includes a plasma cutting power supply configured to provide a cutting current to a torch to create a plasma arc, a controllable gas valve for regulating at least one of a flow rate and a pressure of a plasma gas supplied to the torch, and a controller operatively connected to the plasma cutting power supply to control a current level of the cutting current, and operatively connected to the controllable gas valve to adjust a valve position of the controllable gas valve. The method further includes receiving real-time torch position information from a motion control system that controls positioning of the torch. The real-time torch position information includes torch positions along a first axis and torch positions along a second axis that is perpendicular to the first axis. The method further includes calculating, by the controller, respective derivatives from the torch positions along the first axis and the torch positions along the second axis, and calculating, by the controller, a real-time velocity magnitude of the torch from the respective derivatives. The method further includes adjusting the current level of the cutting current and the valve position of the controllable gas valve based on the calculated real-time velocity magnitude of the torch.

BRIEF DESCRIPTION OF THE DRAWINGS

The foregoing and other aspects of the invention will become apparent to those skilled in the art to which the invention relates upon reading the following description with reference to the accompanying drawings, in which:

FIG. 1 is a perspective view of a plasma cutting table;

FIG. 2 is a schematic representation of an example plasma cutting system;

FIG. 3 is a schematic representation of an example plasma cutting system;

FIG. 4 shows a plasma cutting operation;

FIG. 5 shows a plasma cutting operation;

FIG. 6 shows a plasma cutting operation;

FIG. 7 shows a plasma cutting operation;

FIG. 8 shows a plasma cutting operation;

FIG. 9 is a flow diagram of an example plasma cutting method; and

FIG. 10 shows an example controller.

DETAILED DESCRIPTION OF THE INVENTION

The present invention relates to plasma cutting systems. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, the noun "real time" and the adjective "real-time" refer to instances of both real time and near-real time (e.g., within milliseconds or hundreds of milliseconds, such a up to one second, from actual real time as determined by processing latency, network latency, and/or other communication latency).

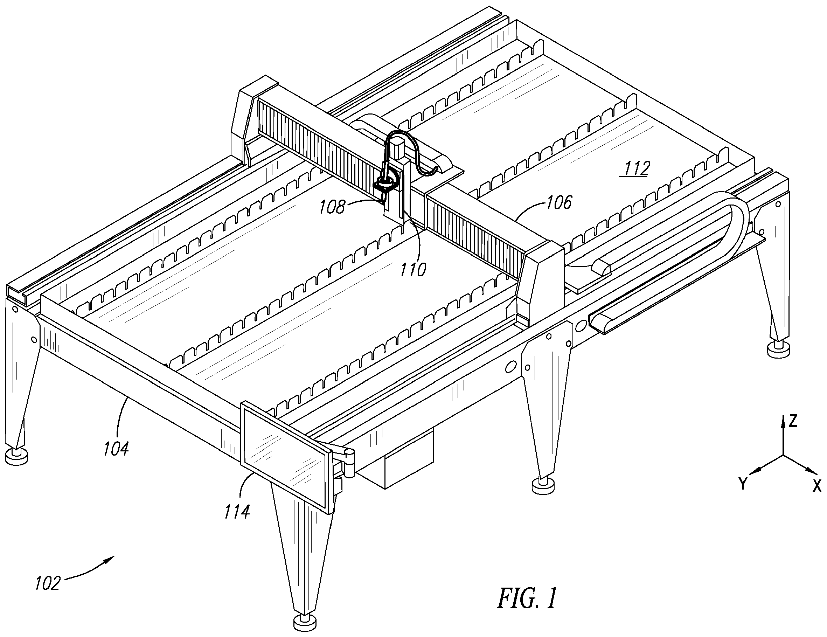

Figure 1 shows an example plasma cutting table 102. The plasma cutting table 102 has a main body 104 upon which a workpiece, such as a metal sheet or plate, is placed. The plasma cutting table 102 includes a gantry 106 that can move back and forth along the length of the cutting table's main body 104 in a first direction (e.g., in a Y direction). The gantry 106 can move on tracks or rails that extend along the sides of the table 102. A plasma cutting torch 108 is attached to a movable torch carriage 110 that is mounted on the gantry 106. The torch carriage 110 can move back and forth along the gantry 106 in a second direction (e.g., in an X direction) that is perpendicular to the first direction. The plasma cutting table 102 can be programmed to make precise cuts in a workpiece through controlled movements of the torch carriage 110 and gantry 106 in the X and Y directions, respectively. In certain embodiments, the torch carriage 110 can move the plasma cutting torch 108 vertically toward and away from the workpiece (e.g., in a Z direction), so that the torch can be moved in three perpendicular directions. In certain embodiments, the torch carriage 110 can also rotate or tilt the torch 108 in a plane perpendicular to the plane of the table (e.g., in the X-Z plane), to make beveled cuts. In further embodiments, the torch carriage 110 can also rotate the torch 108 about the vertical or Z-axis when cutting a part from a workpiece, to maintain an angular orientation of the torch or plasma arc with respect to the kerf cut through the workpiece.

The plasma cutting table 102 can include a water tray 112 located adjacent the workpiece. During a plasma cutting operation, the water tray 112 is filled with water, and the water can be drained to allow the water chamber to be cleaned to remove accumulated dross and slag. The plasma cutting table 102 can also include a user interface 114 for setting various operational parameters of the plasma cutting table and the plasma cutting operation. The user interface 114 can be operatively connected to a motion controller, such as a CNC, and/or operatively connected to a plasma cutting power supply or plasma cutting control system.

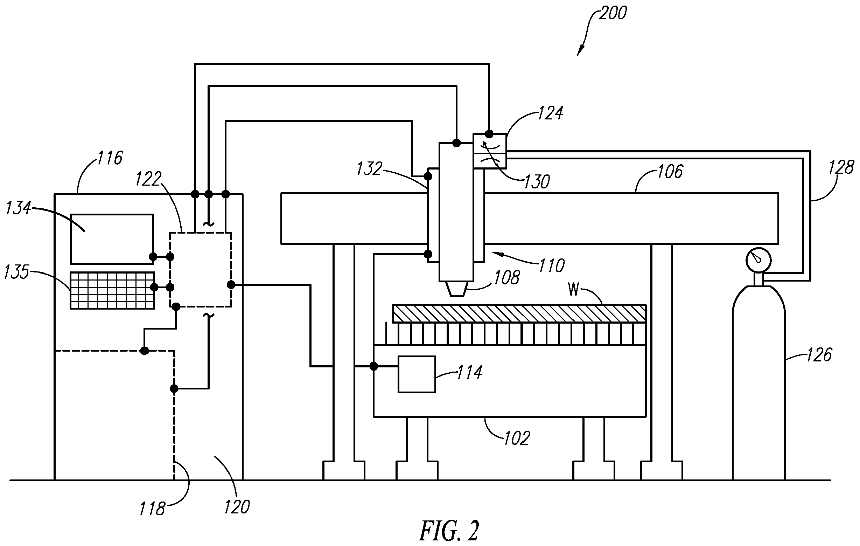

Figure 2 depicts an exemplary embodiment of a plasma cutting system 200. The plasma cutting system 200 can include an integrated plasma cutting control system 116. The plasma cutting control system 116 can include a power supply electronics module 118 which functions as a plasma cutting power supply and is used to generate the cutting current signal that is sent to the torch 108. The power supply electronics module 118 provides the torch 108 with cutting current to create a plasma arc for cutting a part from a workpiece W. All of the power electronics which are used to generate the cutting current signal can be located within the same housing 120 as a main system controller 122. Alternatively, the plasma cutting system 200 can include a separate plasma cutting power supply that is operatively coupled to the control system 116. The main system controller 122 controls various aspects of the cutting operation, such as current and gas flow control of plasma and shielding gas. As shown, the controller 122 communicates with the power generation components of the power supply module 118 internal to the housing 120 to control operations of the power supply module. Further, the controller 122 controls the plasma and shielding gas flow and/or pressure by directly communicating with a gas flow control device 124. The gas flow control device 124 controls the flow of gas from a gas supply 126 and gas line 128 to the torch 108 via a controllable gas valve 130 or valves. The controllable gas valve 130 or valves can regulate plasma and shielding gas pressure and/or flow rate to the torch 108. The main system controller 122 is operatively connected to the plasma cutting power supply to control a current level of the cutting current, and operatively connected to the controllable gas valve 130 to simultaneously adjust a valve position of the controllable gas valve. The operative connections may or may not be direct connections. For example, the controller 122 could provide a positioning signal (e.g., 4-20 mA, 0-10 V, etc.) to the gas flow control device 124 that directly controls the movement of a proportional valve in the gas flow control device, or the controller could communicate positioning information to a further electronic controller in the gas flow control device, and the further electronic controller would control the gas valve accordingly. The main system controller 122 can send positioning signals to the flow control device 124 to control the positions of the valves and, thus, adjust gas pressure/flow rate. The main system controller 122 can simultaneously adjust the cutting amperage applied to the torch 108 by controlling operations of the power supply electronics module 118. The main system controller 122 can adjust the gas pressure/flow rate and current level of the cutting current in concert (e.g., one level based on the other) using, for example, a lookup table, calculation, or other algorithm. In plasma cutting operations that utilize both a plasma and shielding gas, the main system controller 122 can control both gas flows in concert with the current level; however, in plasma cutting operations that utilize only a plasma gas, the main system controller 122 will control just the plasma gas flow.

The main system controller 122 directly communicates with a motion controller 132. The motion controller 132 controls the movements of a gantry 106 along the cutting table 102, the movements of a torch-holding carriage 110 along the gantry, the vertical positioning the torch 108 on the gantry, and possibly rotations of the torch along horizontal and/or vertical axes. Accordingly, the motion controller 132 can control movements of the torch 108 in X, Y, and Z directions, and certain rotations of the torch if desired. With further reference to Fig. 1, the Y direction or axis can extend into and out of the plane of Fig. 2, along the length of the cutting table 102. The X direction or axis can extend along the gantry 106. The Z direction or axis can be substantially vertical, extending toward and away from the cutting table 102. In addition to controlling the movements of the torch-holding carriage 110 along the gantry 106 in the X direction, and the movements of the gantry 106 along the table 102 in the Y direction, the motion controller 132 also controls the height of the torch 108 in the Z direction during operation of the system 200, and the angling of the torch 108 for any desired bevel cutting and rotation of the torch about the Z-axis for cut consistency.

To the extent the cutting table 102 has any automated or motion functions, the main system controller 122 can be coupled to the table to control the table's operations. For example, if the table 102 is a water table or can move the workpiece, the main system controller 122 can control these operations. The plasma cutting control system 116 can have a user interface output device 134 (e.g., a user interface screen), and/or a user interface input device 135 (e.g., a keyboard) to allow the user to input and review various operational parameters and characteristics of the plasma cutting system 200 and the cutting operation.

The main system controller 122 and/or any other controller discussed herein (e.g., the motion controller 132) can include an electronic controller having one or more processors. For example, the controller 122 can include one or more of a microprocessor, a microcontroller, a digital signal processor (DSP), an application specific integrated circuit (ASIC), a field-programmable gate array (FPGA), discrete logic circuitry, or the like. The main system controller 122 can further include memory and may store program instructions that cause the controller to provide the functionality ascribed to it herein. The memory may include one or more volatile, nonvolatile, magnetic, optical, or electrical media, such as read-only memory (ROM), random access memory (RAM), electrically-erasable programmable ROM (EEPROM), flash memory, or the like. The main system controller 122 can further include one or more analog-to-digital (A/D) converters for processing various analog inputs to the controller, and one or more digital-to-analog (D/A) converters for processing various digital outputs from the controller.

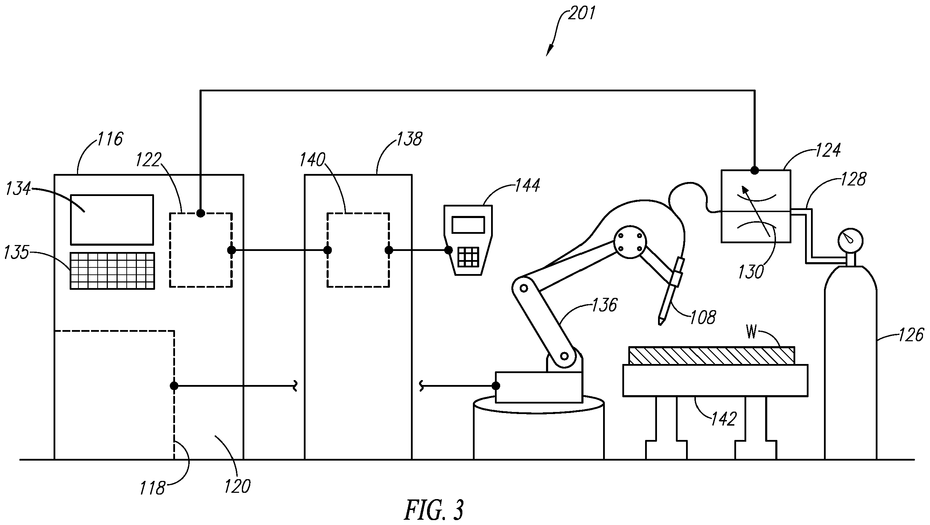

Figure 3 depicts a further exemplary embodiment of a plasma cutting system 201. The system 201 is similar to the system shown in Fig. 2 except that the gantry table and motion controller are replaced with a robot arm 136 and robot controller 138. The robot controller 138 includes control circuitry 140 for controlling the movements of the robot arm 136. An example robot arm 136 is a 6-axis robot arm. The end effector of the robot arm 136 is the plasma torch 108 and the robot arm manipulates the plasma torch to cut a part from the workpiece W held by a fixture 142. The control circuitry 140 in the robot controller 138 is operatively connected to the main system controller 122 in the plasma cutting control system 116 for bidirectional communications therewith. The robot controller 138 can include a user interface, such as a teach pendant 144, to program the movements of the robot arm 136 and otherwise interact with the robot system and, in certain embodiments, interact with the plasma cutting control system 116. As used herein, the terms "motion controller" and "motion control system" include circuitry for controlling the movements and positioning of a plasma cutting torch, whether on a cutting table or robot arm. Thus, "motion controller" and "motion control system" include the motion controller 132 shown in Fig. 2 and the robot controller 138 shown in Fig. 3, as well as other known motion controllers for plasma cutting operations. For ease of explanation, the motion control system that controls positioning of the torch, and its interaction with the main system controller 122, is discussed below in the context of the motion controller 132 shown in Fig. 2. However, various aspects of the motion control system are equally applicable to the robot controller 138 and other known motion controllers for plasma cutting operations, as will be appreciated by one of ordinary skill in the art.

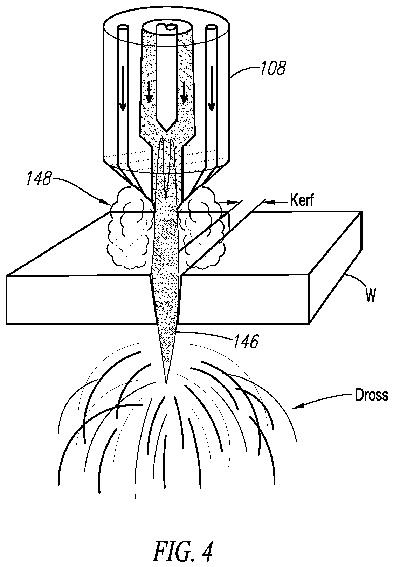

Figure 4 schematically shows an example plasma cutting operation. The plasma cutting torch 108 generates a plasma jet or plasma arc 146 that cuts a kerf through the workpiece W. The "kerf" is the width of material removed during plasma cutting. The plasma torch 108 contains passages for the plasma gas and optionally a shielding gas 148. The use of a shielding gas can help constrict the plasma arc 146 and blow away the dross from the workpiece W.

With reference to Figs. 2 and 3, the motion controller 132 (or robot controller 138) is programmed to move the torch 108 during a cutting operation to cut a part of a desired shape from a workpiece W located on the cutting table 102 or held by a fixture 142. The main system controller 122 is operatively connected to the motion controller 132 (or robot controller 138) to receive torch position feedback information in real time during the cutting operation. The motion controller 132 (or robot controller 138) continuously sends, in real time, present torch position information to the main system controller 122 during cutting. The main system controller 122 knows the current and past positions of the torch 108 and can determine, in real time, the torch velocity and acceleration. The real-time torch position information can include torch positions along at least a first axis, torch positions along a first axis and a second axis that is perpendicular to the first axis, or torch positions along three axes that are perpendicular to each other (e.g., along the X, Y and Z axes). The real-time torch position information could also include a radial distance and an angle or angles (e.g., polar coordinates, cylindrical coordinates, or spherical coordinates).

The main system controller 122 receives the real-time torch position information and samples the torch position information periodically (e.g., every 100 ms) and calculates the torch's real-time velocity magnitude. This is done, for example, by calculating respective first derivatives or rate of change of the torch position along the different axes of movement (e.g., X', Y', Z') and then calculating the magnitude of the velocity. In a Cartesian coordinate system, the magnitude of velocity can be calculated as the square root of the sum of the squared derivatives or

$$\sqrt{(X'^2 + Y'^2 + Z'^2)}$$

. In certain embodiments, the main system controller 122 only calculates the velocity magnitude of torch movements in a plane parallel to the workpiece W (e.g., in the X-Y plane), and, thus, needs only to calculate the first derivatives of movements in such a plane (e.g., X' and Y'). If the main system controller 122 only cares about the real-time velocity magnitude of torch 108 movements in a plane parallel to the workpiece W, then the velocity magnitude can be calculated as $\sqrt{(X'^2 + Y'^2)}$ . Information about torch acceleration can be calculated similar to velocity using the second derivatives of the torch position (e.g., X", Y", Z").

The main system controller 122 is configured to adjust the current level of the cutting current and the valve position of the controllable gas valve 130 based on the calculated real-time velocity magnitude of the torch 108. Thus, the main system controller 122 can adjust plasma (and optionally shielding) gas pressures and/or flow rates and plasma cutting current level in real time based on the present velocity of the torch 108. As the torch velocity changes, the main system controller 122 will adjust the plasma and shielding gas pressures/flow rates and the cutting current level accordingly. As noted above, the main system controller 122 can adjust the gas pressure/flow rate and current level of the cutting current in concert using, a lookup table, calculation, or other algorithm. The lookup table, calculation, or other algorithm can include torch velocity as a parameter for determining the correct gas pressure/flow rate and cutting current. For example, the lookup table can relate torch velocity to the correct gas parameters and current level. Within the plasma cutting system, it is to be expected that the cutting current will respond more quickly to set point changes than the gas flow, so adjustments to the gas valve position based on torch velocity can slightly lead (in time) changes to the current level.

When cutting a part from a workpiece, a consistent kerf is desirable so that the part has generally uniform edges and correct dimensions. Torch velocity can affect the kerf, and velocity changes can result in a widening or narrowing of the kerf. For example, faster cutting speeds provide a narrower kerf and slower cutting speeds provide a wider kerf. If the cutting current level is kept constant while the torch velocity changes, the kerf can widen and narrow and will be inconsistent. However, adjusting the current level based on torch velocity can help to maintain kerf consistency. For example, increasing the cutting amperage will widen the kerf, and decreasing the cutting amperage will narrow the kerf. Adjustments to the cutting current level can be used to offset changes in torch velocity to maintain kerf consistency. If torch velocity decreases, the cutting current level can also be reduced so that the kerf is not widened due to the slower torch velocity. If torch velocity increases, the cutting current level can also be increased so that the kerf is not narrowed due to the faster torch velocity. The correct plasma and shielding gas pressure/flow rate will depend on the cutting current level, so plasma and shielding gas amounts can also be adjusted based on torch velocity.

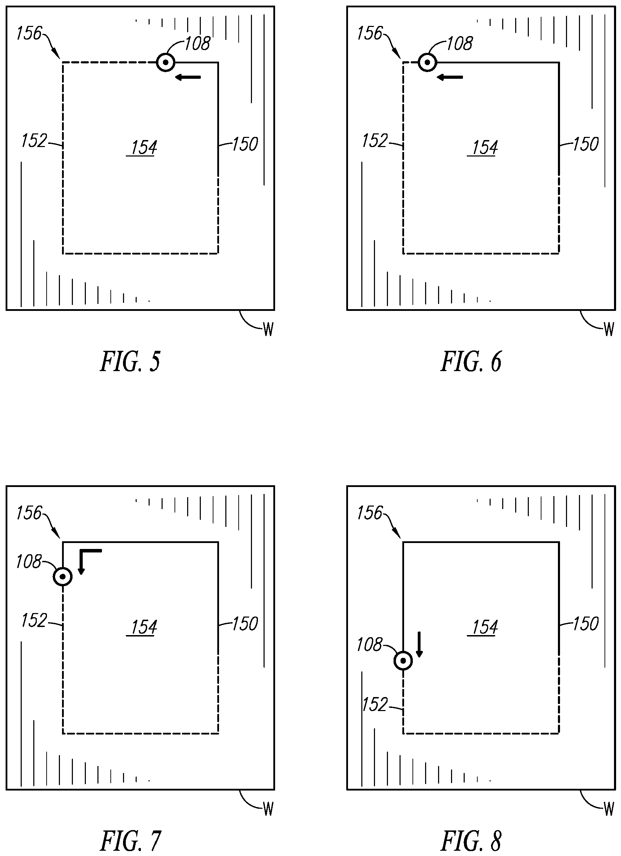

It is common for torch velocity to decrease and then increase when cutting corner portions of a part. Figures 5 - 8 show an example plasma cutting operation during which the cutting current level and gas valve position can be adjusted as torch velocity changes, to maintain a consistent kerf. The kerf 150 is shown in solid line in Figs. 5 - 8. The remaining uncut portion 152 of the part 154 to be cut from the workpiece W is shown in dashed lines. The part 154 is square and the torch 108 is shown cutting the upper side and upper left corner 156 of the part. Between Figs. 5 and 6, the torch velocity will decrease as the torch 108 approaches the corner 156, and between Figs. 7 and 8, the torch velocity will increase as the torch departs from the corner.

From the torch position information received from the motion controller 132, the changes in torch velocity can be recognized by the main system controller 122 in real time. If the cutting current level is kept constant while the corner 156 is cut, the kerf 150 will widen at the corner due to the slower torch velocity. To avoid this, the main system controller 122 can determine the torch velocity magnitude and reduce the current level of the cutting current, and adjust the valve position of the controllable gas valve 130, as the torch 108 approaches the corner 156. As the torch 108 slows down near the corner cut, the current level and gas flow will be reduced by the main system controller 122 to avoid blowing out too much material in the corner 156. This can make the cut edges along the workpiece W more consistent (i.e., keep the kerf 150 consistent). As the torch 108 departs from the corner 156 and speeds up, the main system controller 122 can increase the cutting current level and increase the gas flow to the torch.

The main system controller 122 can also weigh the velocity in certain directions when adjusting gas pressure/flow rate and current level. For example, the main system controller 122 can take into account the velocity in the X and Y directions to a greater degree than velocity in the Z direction. That is, velocity changes in the Z direction can be less impactful on gas flow and current level adjustments than velocity changes in the X and Y directions. The main system controller 122 can also adjust the gas pressure/flow rate and cutting current level based on a calculated real-time velocity magnitude in less than the three axial directions, such as in only one direction or in two directions (e.g, X and Y directions).

When cutting of the part 154 is complete, the main system controller 122 turns off the plasma arc and the arc "snaps off". Abruptly snapping off the arc when the arc is long and the current is high causes wear and tear on the electrode and can reduce consumable life. For example, an excessive amount of hafnium is pulled from the electrode when the arc snaps off abruptly. Deterioration of the nozzle orifice in the torch is also accelerated when the arc abruptly snaps off.

To reduce the wear on the consumables in the torch 108 due to the arc snapping, the plasma cutting system drives the torch toward the workpiece W (e.g., downward or in the Z direction) to shorten the arc length as the current is reduced by the main system controller 122 at the end of a cutting operation. The movement of the torch 108 toward the workpiece W is controlled by the motion controller 132, or can be controlled by the main system controller 122. By moving the torch 108 toward the workpiece W, the arc is kept as short as possible but is maintained as the current approaches 0 amps. The arc then snaps off at a lower current level than it would if the torch 108 had not been driven toward the workpiece W. The lower current level as the arc extinguishes reduces damage to the nozzle orifice and reduces or prevents the hafnium in the electrode from being pulled away, which leads to longer and less variable consumable life. In certain embodiments, the rate of current reduction before the arc snaps off and the motion of the torch 108 toward the workpiece W can be tied to a logarithmic gas curve associated with the venting of the gas from the torch at the end of the plasma cutting operation.

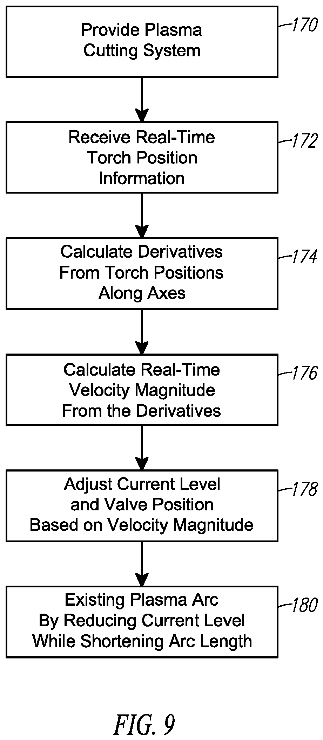

Figure 9 provides a flow diagram of an example plasma cutting method performed by a plasma cutting system. The plasma cutting system, such as a system described above, is provided in step 170. Real-time torch position information is received from a motion control system that controls positioning of a torch (step 172). The real-time torch position information can include torch positions along a first axis and torch positions along a second axis that is perpendicular to the first axis. A controller of the plasma cutting system calculates respective derivatives from the torch positions along the first axis and the torch positions along the second axis (step 174). The controller calculates a real-time velocity magnitude of the torch from the respective derivatives (step 176). The controller adjusts the current level of the cutting current and the valve position of a controllable gas valve based on the calculated real-time velocity magnitude of the torch (step 178). At the end of a cutting operation, the controller extinguishes the plasma arc by reducing the current level of the cutting current while an arc length of the plasma arc is simultaneously shortened by movement of the torch toward a workpiece (step 180).

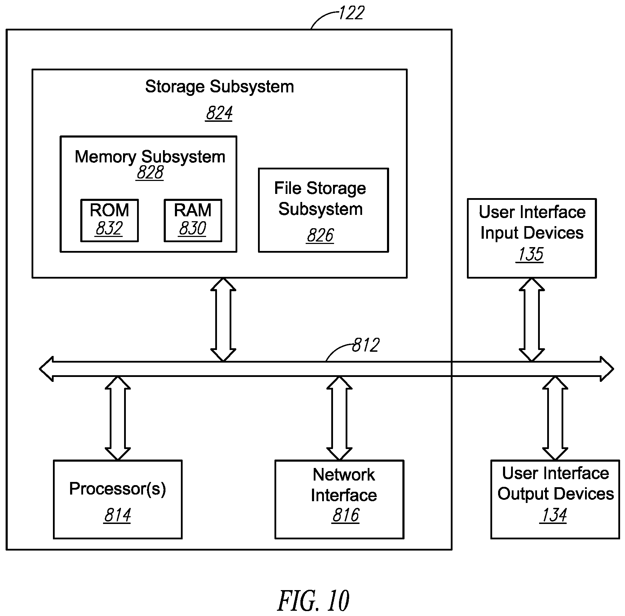

Figure 10 illustrates an embodiment of an example controller, such as the main system controller 122 of the plasma cutting systems 200, 201 discussed above. The controller 122 includes at least one processor 814 which communicates with a number of peripheral devices via bus subsystem 812. These peripheral devices may include a storage subsystem 824, including, for example, a memory subsystem 828 and a file storage subsystem 826, user interface input devices 135, user interface output devices 134, and a network interface subsystem 816. The input and output devices allow user interaction with the controller 122. Network interface subsystem 816 provides an interface to outside networks and is coupled to corresponding interface devices in other computer systems.

User interface input devices 135 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 122 or onto a communication network.

User interface output devices 134 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 122 to the user or to another machine or computer system.

Storage subsystem 824 provides a non-transitory, computer-readable storage medium that stores programming and data constructs that provide the functionality of some or all of the modules described herein. For example, the storage subsystem 824 can include stored relationships that correlate torch velocity to cutting current level, and that correlate torch velocity and/or cutting current level to plasma or shield gas valve positions, pressures, flow rates, etc.

These software modules are generally executed by processor 814 alone or in combination with other processors. Memory 828 used in the storage subsystem 824 can include a number of memories including a main random access memory (RAM) 830 for storage of instructions and data during program execution and a read only memory (ROM) 832 in which fixed instructions are stored. A file storage subsystem 826 can provide persistent storage for program and data files, and may include solid state memory, a hard disk drive, a floppy disk drive along with associated removable media, a CD-ROM drive, an optical drive, flash memory, or removable media cartridges. The modules implementing the functionality of certain embodiments may be stored by file storage subsystem 826 in the storage subsystem 824, or in other machines accessible by the processor(s) 814.

Bus subsystem 812 provides a mechanism for letting the various components and subsystems of the controller 122 communicate with each other as intended. Although bus subsystem 812 is shown schematically as a single bus, alternative embodiments of the bus subsystem may use multiple buses.

The controller 122 can be of varying types including a workstation, server, computing cluster, blade server, server farm, or any other data processing system or computing device. Due to the ever-changing nature of computing devices and networks, the description of the controller 122 depicted in Fig. 10 is intended only as a specific example for purposes of illustrating some embodiments. Many other configurations of the controller 122 are possible having more or fewer components than the controller depicted in Fig. 10.

It should be evident that this disclosure is by way of example and that various changes may be made by adding, modifying or eliminating details without departing from the scope of the present invention as defined in the appended claims.

REFERENCE NUMBERS

**[0036]**

| | | | |
|-----|------------------------------|-----|----------------------------|
| 102 | cutting table | 170 | step |
| 104 | main body | 172 | step |
| 106 | gantry | 174 | step |
| 108 | plasma cutting torch | 176 | step |
| 110 | torch carriage | 178 | step |
| 112 | water tray | 180 | step |
| 114 | user interface | 200 | plasma cutting system |
| 116 | plasma cutting control system | 201 | plasma cutting system |
| 118 | power supply electronics modul | 812 | bus subsystem |
| | | 814 | processor |
| 120 | housing | 816 | network interface subsystem |

(continued)

| | | | |
|---|---|---|---|
| 122 | main system controller | 824 | storage subsystem |
| 124 | gas flow control device | 826 | file storage subsystem |
| 126 | gas supply | 828 | memory |
| 128 | gas line | 830 | random access memory (RAM) |
| 130 | gas valve | | |
| 132 | motion controller | 832 | read-only memory (ROM) |
| 134 | user interface output device | | |
| 135 | user interface input device | A/D | analog-to-digital |
| 136 | robot arm | ASIC | application specific inte grated circuit |
| 138 | robot controller | | |
| 140 | control circuitry | CRT | cathode ray tube |
| 142 | fixture | D/A | digital-to-analog |
| 144 | teach pendant | DSP | digital signal processor |
| 146 | plasma jet / plasma arc | EEPROM | electrically-erasable pro grammable ROM |
| 148 | shielding gas | | |
| 150 | kerf | FPGA | field-programmable gate array |
| 152 | uncut portion | | |
| 154 | part | LCD | liquid crystal display |
| 156 | corner | W | workpiece |

## Claims

1. A plasma cutting system (200, 201), comprising:

a plasma cutting power supply configured to provide a cutting current to a torch (108) to create a plasma arc (146);
a controllable gas valve (130) for regulating at least one of a flow rate and a pressure of a plasma gas supplied to the torch (108); and
a controller operatively connected to the plasma cutting power supply to control a current level of the cutting current, and operatively connected to the controllable gas valve (130) to adjust a valve position of the controllable gas valve (130), **characterized in that**
the controller is configured to:

receive real-time torch position information from a motion control system that controls positioning of the torch (108), wherein the real-time torch position information includes torch positions along a first axis and torch positions along a second axis that is perpendicular to the first axis,
calculate respective derivatives from the torch positions along the first axis and the torch positions along the second axis,
calculate a real-time velocity magnitude of the torch (108) from the respective derivatives, and
adjust the current level of the cutting current and the valve position of the controllable gas valve (130) based on the calculated real-time velocity magnitude of the torch (108)
wherein the controller is further configured to extinguish the plasma arc (146) to end a cutting operation by reducing the current level of the cutting current while an arc (146) length of the plasma arc is simultaneously shortened by movement of the torch (108) toward a workpiece.

2. The plasma cutting system (200, 201) of claim 1, wherein the current level of the cutting current is reduced based on a reduction in the calculated real-time velocity magnitude of the torch (108).

3. The plasma cutting system (200, 201) of claim 1 or 2, wherein the controller maintains kerf consistency by reducing the current level of the cutting current as the torch (108) approaches a corner portion of a part cut from a workpiece (W).

4. The plasma cutting system (200, 201) of any of the claims 1 to 3, wherein the controller is further configured to extinguish the plasma arc (146) to end a cutting operation by reducing the current level of the cutting current while an arc (146) length of the plasma arc is simultaneously shortened by movement of the torch (108) toward a workpiece.

**5.** A plasma cutting system (200, 201), comprising:

a plasma cutting power supply configured to provide a cutting current to a torch (108) to create a plasma arc (146);
a controllable gas valve (130) for regulating at least one of a flow rate and a pressure of a plasma gas supplied to the torch (108); and
a controller operatively connected to the plasma cutting power supply to control a current level of the cutting current, and operatively connected to the controllable gas valve (130) to adjust a valve position of the controllable gas valve (130), **characterized in that**
the controller is configured to:

receive real-time torch position information from a motion control system that adjusts velocity of the torch (108) when cutting a corner portion of a part cut from a workpiece (W),
calculate first derivatives from the real-time torch position information and determine real-time velocity magnitudes of the torch (108) when the corner portion of the part is cut from the workpiece (W), and
maintain kerf consistency by adjusting, based on the determined real-time velocity magnitudes of the torch (108), the current level of the cutting current and the valve position of the controllable gas valve (130) as the corner portion of the part is cut from the workpiece (W),
wherein the controller is further configured to extinguish the plasma arc (146) to end a cutting operation by reducing the current level of the cutting current while an arc (146) length of the plasma arc is simultaneously shortened by movement of the torch (108) toward a workpiece.

**6.** The plasma cutting system (200, 201) of claim 5, wherein the real-time torch position information includes torch positions along a first axis and torch positions along a second axis that is perpendicular to the first axis, and the controller is configured to calculate respective first derivatives from the torch positions along the first axis and the torch positions along the second axis, or wherein the real-time torch position information includes torch positions along a first axis, torch positions along a second axis that is perpendicular to the first axis, and torch positions along a third axis that is perpendicular to the first axis and the second axis, and the controller is configured to calculate respective first derivatives from the torch positions along the first axis, the torch positions along the second axis, and the torch positions along the third axis.

**7.** The plasma cutting system (200, 201) of any of the claims 1 to 6, wherein the current level of the cutting current and the flow rate of the plasma gas supplied to the torch (108) are reduced based on a reduction in the calculated real-time velocity magnitude of the torch (108) or in the real-time velocity magnitudes of the torch (108), and increased based on an increase in the calculated real-time velocity magnitude of the torch (108) or in the real-time velocity magnitudes of the torch (108).

**8.** The plasma cutting system (200, 201) of any of the claims 1 to 7, wherein the controller reduces the current level of the cutting current and the flow rate of the plasma gas supplied to the torch (108) as the torch (108) approaches the corner portion of the part cut from the workpiece, and/or wherein the controller increases the current level of the cutting current and the flow rate of the plasma gas supplied to the torch (108) as the torch (108) departs from the corner portion of the part cut from the workpiece (W).

**9.** A plasma cutting method, comprising the steps of:
providing a plasma cutting system (200, 201) comprising:

a plasma cutting power supply configured to provide a cutting current to a torch (108) to create a plasma arc (146);
a controllable gas valve (130) for regulating at least one of a flow rate and a pressure of a plasma gas supplied to the torch (108); **characterized in** a controller operatively connected to the plasma cutting power supply to control a current level of the cutting current, and operatively connected to the controllable gas valve (130) to adjust a valve position of the controllable gas valve 130);
being **characterised by** the further steps of receiving real-time torch position information from a motion control system that controls positioning of the torch (108), wherein the real-time torch position information includes torch positions along a first axis and torch positions along a second axis that is perpendicular to the first axis;
calculating, by the controller, respective derivatives from the torch (108) positions along the first axis and the torch positions along the second axis; calculating, by the controller, a real-time velocity magnitude of the torch from the respective derivatives; and
adjusting the current level of the cutting current and the valve position of the controllable gas valve (130) based on the calculated real-time velocity magnitude of the torch (108),

further comprising the step of extinguishing the plasma arc (146) to end a cutting operation by reducing the current level of the cutting current while an arc length of the plasma arc (146) is simultaneously shortened by movement of the torch (108) toward a workpiece.

10. The plasma cutting method of claim 9, wherein the step of adjusting includes reducing the current level of the cutting current and the flow rate of the plasma gas supplied to the torch (108) based on a reduction in the calculated real-time velocity magnitude of the torch (108), and increasing the current level of the cutting current and the flow rate of the plasma gas supplied to the torch (108) based on an increase in the calculated real-time velocity magnitude of the torch (108).

11. The plasma cutting method of claim 9 or 10, wherein the controller maintains kerf consistency by reducing the current level of the cutting current as the torch (108) approaches a corner portion of a part cut from a workpiece (W).

12. The plasma cutting method of any of the claims 9 to 11, wherein the real-time torch position information includes torch positions along a third axis that is perpendicular to the first axis and the second axis, and the controller calculates the real-time velocity magnitude of the torch (108) from a derivative of the torch positions along the third axis.

13. The plasma cutting method of any of the claims 9 to 12, wherein the step of adjusting includes reducing the current level of the cutting current and the flow rate of the plasma gas supplied to the torch (108) as the torch (108) approaches a corner portion of a part cut from a workpiece (W), and/or wherein the step of adjusting includes increasing the current level of the cutting current and the flow rate of the plasma gas supplied to the torch (108) as the torch (108) departs from the corner portion of the part cut from the workpiece (W).

## Patentansprüche

1. Plasmaschneidsystem (200, 201), das umfasst:

eine Plasmaschneidstromversorgung, die dafür konfiguriert ist, einen Brenner (108) mit einem Schneidstrom zu versorgen, um einen Plasmalichtbogen (146) zu erzeugen;
ein steuerbares Gasventil (130) zum Regulieren mindestens eines von einer Strömungsrate und einem Druck eines dem Brenner (108) zugeführten Plasmagases; und
einen Controller, der mit der Plasmaschneidstromversorgung wirkverbunden ist, um einen momentanen Pegel des Schneidstroms zu steuern, und mit dem steuerbaren Gasventil (130) wirkverbunden ist, um eine Ventilposition des steuerbaren Gasventils (130) zu justieren, **dadurch gekennzeichnet, dass**
der Controller konfiguriert ist zum:

Empfangen von Echtzeit-Brennerpositionsinformationen von einem Bewegungssteuerungssystem, das die Positionierung des Brenners (108) steuert, wobei die Echtzeit-Brennerpositionsinformationen Brennerpositionen entlang einer ersten Achse und Brennerpositionen entlang einer zweiten Achse, die senkrecht zu der ersten Achse verläuft, enthalten,
Berechnen jeweiliger Ableitungen aus den Brennerpositionen entlang der ersten Achse und den Brennerpositionen entlang der zweiten Achse,
Berechnen einer Echtzeit-Geschwindigkeitsgrößenordnung des Brenners (108) aus den jeweiligen Ableitungen, und Justieren des momentanen Pegels des Schneidstroms und der Ventilposition des steuerbaren Gasventils (130) auf der Grundlage der berechneten Echtzeit-Geschwindigkeitsgrößenordnung des Brenners (108),
wobei der Controller des Weiteren dafür konfiguriert ist, den Plasmalichtbogen (146) zu löschen, um eine Schneidoperation zu beenden, indem er den momentanen Pegel des Schneidstroms reduziert, während eine Länge des Plasmalichtbogens (146) gleichzeitig durch eine Bewegung des Brenners (108) in Richtung eines Werkstücks verkürzt wird.

2. Plasmaschneidsystem (200, 201) nach Anspruch 1, wobei der momentanen Pegel des Schneidstroms auf der Grundlage einer Reduzierung der berechneten Echtzeit-Geschwindigkeitsgrößenordnung des Brenners (108) reduziert wird.

3. Plasmaschneidsystem (200, 201) nach Anspruch 1 oder 2, wobei der Controller die Schnittfugengleichmäßigkeit aufrecht erhält, indem er den momentanen Pegel des Schneidstroms in dem Maße reduziert, wie sich der Brenner (108) einem Eckabschnitt eines von einem Werkstück (W) abgeschnittenen Teils nähert.

4.  Plasmaschneidsystem (200, 201) nach einem der Ansprüche 1 bis 3, wobei der Controller des Weiteren dafür konfiguriert ist, den Plasmalichtbogen (146) zu löschen, um eine Schneidoperation zu beenden, indem er den momentanen Pegel des Schneidstroms reduziert, während die Länge des Plasmalichtbogens (146) gleichzeitig durch eine Bewegung des Brenners (108) in Richtung eines Werkstücks verkürzt wird.

5.  Plasmaschneidsystem (200, 201), das umfasst:

    eine Plasmaschneidstromversorgung, die dafür konfiguriert ist, einen Brenner (108) mit einem Schneidstrom zu versorgen, um einen Plasmalichtbogen (146) zu erzeugen;
    ein steuerbares Gasventil (130) zum Regulieren mindestens eines von einer Strömungsrate und einem Druck eines dem Brenner (108) zugeführten Plasmagases; und
    einen Controller, der mit der Plasmaschneidstromversorgung wirkverbunden ist, um einen momentanen Pegel des Schneidstroms zu steuern, und mit dem steuerbaren Gasventil (130) wirkverbunden ist, um eine Ventilposition des steuerbaren Gasventils (130) zu justieren, **dadurch gekennzeichnet, dass** der Controller konfiguriert ist zum:

    Empfangen von Echtzeit-Brennerpositionsinformationen von einem Bewegungssteuerungssystem, das eine Geschwindigkeit des Brenners (108) justiert, wenn ein Eckabschnitt eines von einem Werkstück (W) abgeschnittenen Teils geschnitten wird,
    Berechnen erster Ableitungen aus den Echtzeit-Brennerpositionsinformationen und Bestimmen von Echtzeit-Geschwindigkeitsgrößenordnungen des Brenners (108), wenn der Eckabschnitt des Teils von dem Werkstück (W) abgeschnitten wird, und
    Aufrechterhalten einer Schnittfugengleichmäßigkeit durch Justieren, auf der Grundlage der bestimmten Echtzeit-Geschwindigkeitsgrößenordnungen des Brenners (108), des momentanen Pegels des Schneidstroms und der Ventilposition des steuerbaren Gasventils (130), während der Eckabschnitt des Teils von dem Werkstück (W) abgeschnitten wird,
    wobei der Controller des Weiteren dafür konfiguriert ist, den Plasmalichtbogen (146) zu löschen, um eine Schneidoperation zu beenden, indem er den momentanen Pegel des Schneidstroms reduziert, während eine Länge des Plasmalichtbogens (146) gleichzeitig durch eine Bewegung des Brenners (108) in Richtung eines Werkstücks verkürzt wird.

6.  Plasmaschneidsystem (200, 201) nach Anspruch 5, wobei die Echtzeit-Brennerpositionsinformationen Brennerpositionen entlang einer ersten Achse und Brennerpositionen entlang einer zweiten Achse, die senkrecht zu der ersten Achse verläuft, enthalten, und der Controller dafür konfiguriert ist, jeweilige erste Ableitungen aus den Brennerpositionen entlang der ersten Achse und den Brennerpositionen entlang der zweiten Achse zu berechnen, oder wobei die Echtzeit-Brennerpositionsinformationen Brennerpositionen entlang einer ersten Achse, Brennerpositionen entlang einer zweiten Achse, die senkrecht zu der ersten Achse verläuft, und Brennerpositionen entlang einer dritten Achse, die senkrecht zu der ersten Achse und der zweiten Achse verläuft, enthalten, und der Controller konfiguriert ist, jeweilige erste Ableitungen aus den Brennerpositionen entlang der ersten Achse, den Brennerpositionen entlang der zweiten Achse und den Brennerpositionen entlang der dritten Achse zu berechnen.

7.  Plasmaschneidsystem (200, 201) nach einem der Ansprüche 1 bis 6, wobei der momentanen Pegel des Schneidstroms und die Strömungsrate des dem Brenner (108) zugeführten Plasmagases auf der Grundlage einer Reduzierung der berechneten Echtzeit-Geschwindigkeitsgrößenordnung des Brenners (108) oder der Echtzeit-Geschwindigkeitsgrößenordnungen des Brenners (108) reduziert werden und auf der Grundlage einer Erhöhung der berechneten Echtzeit-Geschwindigkeitsgrößenordnung des Brenners (108) oder der Echtzeit-Geschwindigkeitsgrößenordnungen des Brenners (108) erhöht werden.

8.  Plasmaschneidsystem (200, 201) nach einem der Ansprüche 1 bis 7, wobei der Controller den momentanen Pegel des Schneidstroms und die Strömungsrate des dem Brenner (108) zugeführten Plasmagases in dem Maße reduziert, wie sich der Brenner (108) dem Eckabschnitt des von dem Werkstück abgeschnittenen Teils nähert, und/oder wobei der Controller den momentanen Pegel des Schneidstroms und die Strömungsrate des dem Brenner (108) zugeführten Plasmagases in dem Maße erhöht, wie sich der Brenner (108) von dem Eckabschnitt des von dem Werkstück (W) abgeschnittenen Teils entfernt.

9.  Plasmaschneidverfahren, das folgende Schritte umfasst:

Bereitstellen eines Plasmaschneidsystems (200, 201), das umfasst:

eine Plasmaschneidstromversorgung, die dafür konfiguriert ist, einen Brenner (108) mit einem Schneidstrom zu versorgen, um einen Plasmalichtbogen (146) zu erzeugen;

ein steuerbares Gasventil (130) zum Regulieren mindestens eines von einer Strömungsrate und einem Druck eines dem Brenner (108) zugeführten Plasmagases; **gekennzeichnet durch**

einen Controller, der mit der Plasmaschneidstromversorgung wirkverbunden ist, um einen momentanen Pegel des Schneidstroms zu steuern, und mit dem steuerbaren Gasventil (130) wirkverbunden ist, um eine Ventilposition des steuerbaren Gasventils (130) zu justieren;

**gekennzeichnet durch** die weiteren Schritte des Empfangens von Echtzeit-Brennerpositionsinformationen von einem Bewegungssteuerungssystem, das die Positionierung des Brenners (108) steuert, wobei die Echtzeit-Brennerpositionsinformationen Brennerpositionen entlang einer ersten Achse und Brennerpositionen entlang einer zweiten Achse, die senkrecht zu der ersten Achse verläuft, enthalten;

Berechnen, durch den Controller, jeweiliger Ableitungen aus den Positionen des Brenners (108) entlang der ersten Achse und den Brennerpositionen entlang der zweiten Achse;

Berechnen, durch den Controller, einer Echtzeit-Geschwindigkeitsgrößenordnung des Brenners aus den jeweiligen Ableitungen, und

Justieren des momentanen Pegels des Schneidstroms und der Ventilposition des steuerbaren Gasventils (130) auf der Grundlage der berechneten Echtzeit-Geschwindigkeitsgrößenordnung des Brenners (100), und des Weiteren den Schritt umfasst, den Plasmalichtbogen (146) zu löschen, um eine Schneidoperation zu beenden, indem der momentanen Pegel des Schneidstroms reduziert wird, während eine Länge des Plasmalichtbogens (146) gleichzeitig durch eine Bewegung des Brenners (100) in Richtung eines Werkstücks verkürzt wird.

10. Plasmaschneidverfahren nach Anspruch 9, wobei der Schritt des Justierens das Reduzieren des momentanen Pegels des Schneidstroms und der Strömungsrate des dem Brenner (108) zugeführten Plasmagases auf der Grundlage einer Reduzierung der berechneten Echtzeit-Geschwindigkeitsgrößenordnung des Brenners (108) und das Erhöhen des momentanen Pegels des Schneidstroms und der Strömungsrate des dem Brenner (108) zugeführten Plasmagases auf der Grundlage einer Erhöhung der berechneten Echtzeit-Geschwindigkeitsgrößenordnung des Brenners (108) enthält.

11. Plasmaschneidverfahren nach Anspruch 9 oder 10, wobei der Controller die Schnittfugengleichmäßigkeit aufrecht erhält, indem er den momentanen Pegel des Schneidstroms in dem Maße reduziert, wie sich der Brenner (108) einem Eckabschnitt eines von einem Werkstück (W) abgeschnittenen Teils nähert.

12. Plasmaschneidverfahren nach einem der Ansprüche 9 bis 11, wobei die Echtzeit-Brennerpositionsinformationen Brennerpositionen entlang einer dritten Achse enthalten, die senkrecht zu der ersten Achse und der zweiten Achse verläuft, und der Controller die Echtzeit-Geschwindigkeitsgrößenordnung des Brenners (108) aus einer Ableitung der Brennerpositionen entlang der dritten Achse berechnet.

13. Plasmaschneidverfahren nach einem der Ansprüche 9 bis 12, wobei der Schritt des Justierens enthält, den momentanen Pegel des Schneidstroms und die Strömungsrate des dem Brenner (108) zugeführten Plasmagases in dem Maße zu reduzieren, wie sich der Brenner (108) einem Eckabschnitt eines von einem Werkstück (W) abgeschnittenen Teils nähert, und/oder wobei der Schritt des Justierens enthält, den momentanen Pegel des Schneidstroms und die Strömungsrate des dem Brenner (108) zugeführten Plasmagases in dem Maße zu erhöhen, wie sich der Brenner (108) von dem Eckabschnitt des von dem Werkstück (W) abgeschnittenen Teils entfernt.

**Revendications**

1. Système de découpe plasma (200, 201), comprenant :

une alimentation électrique de découpe plasma configurée pour fournir un courant de découpe à une torche (108) pour créer un arc plasma (146) ;

une vanne de gaz pouvant être commandée (130) pour réguler au moins l'un parmi un débit et une pression d'un gaz plasma distribué à la torche (108) ; et

un dispositif de commande relié fonctionnellement à l'alimentation électrique de découpe plasma pour commander un niveau de courant du courant de découpe, et relié fonctionnellement à la vanne de gaz pouvant être commandée (130) pour ajuster une position de vanne de la vanne de gaz pouvant être commandée (130), **caractérisé en ce que**
le dispositif de commande est configuré pour :

recevoir des informations de position de torche en temps réel depuis un système de commande de mouvement qui commande un positionnement de la torche (108), dans lequel les informations de position de torche en temps réel incluent des positions de torche le long d'un premier axe et des positions de torche le long d'un deuxième axe qui est perpendiculaire au premier axe,
calculer des dérivées respectives à partir des positions de torche le long du premier axe et des positions de torche le long du deuxième axe,
calculer une grandeur de vitesse en temps réel de la torche (108) à partir des dérivées respectives, et ajuster le niveau de courant du courant de découpe et la position de vanne de la vanne de gaz pouvant être commandée (130) sur la base de la grandeur de vitesse en temps réel calculée de la torche (108),
dans lequel le dispositif de commande est en outre configuré pour éteindre l'arc plasma (146) pour terminer une opération de découpe par la réduction du niveau de courant du courant de découpe pendant qu'une longueur d'arc (146) de l'arc plasma est simultanément réduite par un déplacement de la torche (108) vers une pièce d'ouvrage.

2. Système de découpe plasma (200, 201) selon la revendication 1, dans lequel le niveau de courant du courant de découpe est réduit sur la base d'une réduction de la grandeur de vitesse en temps réel calculée de la torche (108).

3. Système de découpe plasma (200, 201) selon la revendication 1 ou 2, dans lequel le dispositif de commande maintient une cohérence de saignée par la réduction du niveau de courant du courant de découpe au fur et à mesure que la torche (108) s'approche d'une portion de coin d'une partie découpée d'une pièce d'ouvrage (W) .

4. Système de découpe plasma (200, 201) selon l'une quelconque des revendications 1 à 3, dans lequel le dispositif de commande est en outre configuré pour éteindre l'arc plasma (146) pour terminer une opération de découpe par la réduction du niveau de courant du courant de découpe pendant qu'une longueur d'arc (146) de l'arc plasma est simultanément réduite par un déplacement de la torche (108) vers une pièce d'ouvrage.

5. Système de découpe plasma (200, 201), comprenant :

une alimentation électrique de découpe plasma configurée pour fournir un courant de découpe à une torche (108) pour créer un arc plasma (146) ;
une vanne de gaz pouvant être commandée (130) pour réguler au moins l'un parmi un débit et une pression d'un gaz plasma distribué à la torche (108) ; et
un dispositif de commande relié fonctionnellement à l'alimentation électrique de découpe plasma pour commander un niveau de courant du courant de découpe, et relié fonctionnellement à la vanne de gaz pouvant être commandée (130) pour ajuster une position de vanne de la vanne de gaz pouvant être commandée (130), **caractérisé en ce que**
le dispositif de commande est configuré pour :

recevoir des informations de position de torche en temps réel depuis un système de commande de mouvement qui commande une vitesse de la torche (108) lors de la découpe d'une portion de coin d'une partie découpée d'une pièce d'ouvrage (W),
calculer des premières dérivées à partir des informations de position de torche en temps réel et déterminer des grandeurs de vitesse en temps réel de la torche (108) lorsque la portion de coin de la partie est découpée de la pièce d'ouvrage (W), et
maintenir une cohérence de saignée par l'ajustement, sur la base des grandeurs de vitesse en temps réel déterminées de la torche (108), du niveau de courant du courant de découpe et de la position de vanne de la vanne de gaz pouvant être commandée (130) au fur et à mesure que la portion de coin de la partie est découpée de la pièce d'ouvrage (W),
dans lequel le dispositif de commande est en outre configuré pour éteindre l'arc plasma (146) pour terminer une opération de découpe par la réduction du niveau de courant du courant de découpe pendant qu'une longueur d'arc (146) de l'arc plasma est simultanément réduite par un déplacement de la torche (108) vers une pièce d'ouvrage.

6. Système de découpe plasma (200, 201) selon la revendication 5, dans lequel les informations de position de torche en temps réel incluent des positions de torche le long d'un premier axe et des positions de torche le long d'un deuxième axe qui est perpendiculaire au premier axe, et le dispositif de commande est configuré pour calculer des premières dérivées respectives à partir des positions de torche le long du premier axe et des positions de torche le long du deuxième axe, ou dans lequel les informations de position de torche en temps réel incluent des positions de torche le long d'un premier axe, des positions de torche le long d'un deuxième axe qui est perpendiculaire au premier axe, et des positions de torche le long d'un troisième axe qui est perpendiculaire au premier axe et au deuxième axe, et le dispositif de commande est configuré pour calculer des premières dérivées respectives à partir des positions de torche le long du premier axe, des positions de torche le long du deuxième axe et des positions de torche le long du troisième axe.

7. Système de découpe plasma (200, 201) selon l'une quelconque des revendications 1 à 6, dans lequel le niveau de courant du courant de découpe et le débit du gaz plasma distribué à la torche (108) sont réduits sur la base d'une réduction de la grandeur de vitesse en temps réel calculée de la torche (108) ou des grandeurs de vitesse en temps réel de la torche (108), et augmentés sur la base d'une augmentation de la grandeur de vitesse en temps réel calculée de la torche (108) ou des grandeurs de vitesse en temps réel de la torche (108) .

8. Système de découpe plasma (200, 201) selon l'une quelconque des revendications 1 à 7, dans lequel le dispositif de commande réduit le niveau de courant du courant de découpe et le débit du gaz plasma distribué à la torche (108) au fur et à mesure que la torche (108) s'approche de la portion de coin de la partie découpée de la pièce d'ouvrage, et/ou dans lequel le dispositif de commande augmente le niveau de courant du courant de découpe et le débit du gaz plasma distribué à la torche (108) au fur et à mesure que la torche (108) s'éloigne de la portion de coin de la partie découpée de la pièce d'ouvrage (W).

9. Procédé de découpe plasma, comprenant les étapes suivantes :
la fourniture d'un système de découpe plasma (200, 201) comprenant :

une alimentation électrique de découpe plasma configurée pour fournir un courant de découpe à une torche (108) pour créer un arc plasma (146) ;
une vanne de gaz pouvant être commandée (130) pour réguler au moins l'un parmi un débit et une pression d'un gaz plasma distribué à la torche (108) ; **caractérisé par**
un dispositif de commande relié fonctionnellement à l'alimentation électrique de découpe plasma pour commander un niveau de courant du courant de découpe, et relié fonctionnellement à la vanne de gaz pouvant être commandée (130) pour ajuster une position de vanne de la vanne de gaz pouvant être commandée (130) ;
**caractérisé en outre par** les étapes suivantes :

la réception d'informations de position de torche en temps réel depuis un système de commande de mouvement qui commande un positionnement de la torche (108), dans lequel les informations de position de torche en temps réel incluent des positions de torche le long d'un premier axe et des positions de torche le long d'un deuxième axe qui est perpendiculaire au premier axe ;
le calcul, par le dispositif de commande, de dérivées respectives à partir des positions de la torche (108) le long du premier axe et des positions de torche le long du deuxième axe ;
le calcul, par le dispositif de commande, d'une grandeur de vitesse en temps réel de la torche à partir des dérivées respectives ; et
l'ajustement du niveau de courant du courant de découpe et de la position de vanne de la vanne de gaz pouvant être commandée (130) sur la base de la grandeur de vitesse en temps réel calculée de la torche (108),
comprenant en outre l'étape de l'extinction de l'arc plasma (146) pour terminer une opération de découpe par la réduction du niveau de courant du courant de découpe pendant qu'une longueur d'arc de l'arc plasma (146) est simultanément réduite par un déplacement de la torche (108) vers une pièce d'ouvrage.

10. Procédé de découpe plasma selon la revendication 9, dans lequel l'étape de l'ajustement inclut la réduction du niveau de courant du courant de découpe et du débit du gaz plasma distribué à la torche (108) sur la base d'une réduction de la grandeur de vitesse en temps réel calculée de la torche (108) et l'augmentation du niveau de courant du courant de découpe et du débit du gaz plasma distribué à la torche (108) sur la base d'une augmentation de la grandeur de vitesse en temps réel calculée de la torche (108).

11. Procédé de découpe plasma selon la revendication 9 ou 10, dans lequel le dispositif de commande maintient une cohérence de saignée par la réduction du niveau de courant du courant de découpe au fur et à mesure que la torche (108) s'approche d'une portion de coin d'une partie découpée d'une pièce d'ouvrage (W).

12. Procédé de découpe plasma selon l'une quelconque des revendications 9 à 11, dans lequel les informations de position de torche en temps réel incluent des positions de torche le long d'un troisième axe qui est perpendiculaire au premier axe et au deuxième axe, et le dispositif de commande calcule la grandeur de vitesse en temps réel de la torche (108) à partir d'une dérivée des positions de torche le long du troisième axe.

13. Procédé de découpe plasma selon l'une quelconque des revendications 9 à 12, dans lequel l'étape de l'ajustement inclut la réduction du niveau de courant du courant de découpe et du débit du gaz plasma distribué à la torche (108) au fur et à mesure que la torche (108) s'approche d'une portion de coin d'une partie découpée d'une pièce d'ouvrage (W), et/ou dans lequel l'étape de l'ajustement inclut l'augmentation du niveau de courant du courant de découpe et du débit du gaz plasma distribué à la torche (108) au fur et à mesure que la torche (108) s'éloigne de la portion de coin de la partie découpée de la pièce d'ouvrage (W).

EP 3 819 061 B1

*FIG. 1*

*FIG. 2*

*FIG. 3*

EP 3 819 061 B1

*FIG. 4*

*FIG. 5*

*FIG. 6*

*FIG. 7*

*FIG. 8*

FIG. 9

_122_

Storage Subsystem
_824_

Memory Subsystem
_828_

ROM
_832_

RAM
_830_

File Storage
Subsystem
_826_

User Interface
Input Devices
_135_

_812_

Processor(s)
_814_

Network
Interface
_816_

User Interface
Output Devices
_134_

*FIG. 10*

**EP 3 819 061 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015251267 A1